Europäisches Patentamt

European Patent Office

Office européen des brevets

(19)

(11) Numéro de publication : **0 154 098**
**B1**

(12) **FASCICULE DE BREVET EUROPÉEN**

(45) Date de publication du fascicule du brevet :
29.07.87

(21) Numéro de dépôt : **84402433.1**

(22) Date de dépôt : **29.11.84**

(51) Int. Cl.⁴ : **B 01 D 45/14**, F 16 N 39/06,
F 02 C 7/06, F 16 C 32/06

(54) **Dispositif de séparation gaz-liquide et son application au déshuilage de l'air de ventilation des enceintes de paliers d'une turbomachine.**

(30) Priorité : 14.12.83 FR 8319986

(43) Date de publication de la demande :
11.09.85 Bulletin 85/37

(45) Mention de la délivrance du brevet :
29.07.87 Bulletin 87/31

(84) Etats contractants désignés :
DE FR GB

(56) Documents cités :
FR-A- 1 590 886
US-A- 3 486 314
US-A- 3 712 032
US-A- 4 049 401

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Charbonnel, Jean-Louis**
**32, rue du Parc**
**77350 Le Mee sur Seine (FR)**

(74) Mandataire : **Moinat, François**
**S.N.E.C.M.A. Service des Brevets Boîte Postale 81**
**F-91003 Evry Cedex (FR)**

## Description

La présente invention concerne l'épuration des gaz, notamment l'air, des particules liquides qui y sont éventuellement contenues.

Ce problème se pose, par exemple, dans l'exploitation des turbomachines qui mettent en jeu des fluides à différents niveaux de pression, et qui sont le siège de débits de fuite de la haute vers la basse pression, au droit notamment, des joints labyrinthes.

On retrouve de tels courants de fuite à travers les joints d'étanchéité à labyrinthes des enceintes de paliers. En effet, pour éviter que, malgré les joints, de l'huile de lubrification des paliers ne s'échappe de ces enceintes vers l'intérieur du moteur avec les risques que cela comporte, risque d'incendie, si cette huile se rassemble dans les parties chaudes de la machine, risque de pollution des circuits de conditionnement d'air, on maintient un courant de fuite à travers les joints à labyrinthe de l'extérieur vers l'intérieur en évacuant l'air des enceintes jusqu'à une pression plus faible, généralement la pression atmosphérique.

Cependant, en raison du régime fortement turbulent qui y règne, un brouillard constitué de fines gouttelettes d'huile en suspension dans l'air se forme dans l'enceinte. Si rien n'était prévu pour récupérer le maximum d'huile, la quantité d'huile entraînée par l'air évacué par l'extérieur serait suffisamment importante pour vider rapidement le réservoir limitant le rayon d'action de l'appareil ou causant le grippage des paliers.

C'est pourquoi des dispositifs de séparation, ou déshuileurs, sont couramment utilisés sur les turboréacteurs. Ces dispositifs sont généralement centrifuges, ils comportent un rotor alimenté par le gaz à épurer et sont entraînés soit par l'arbre du moteur, soit par le support d'équipements, soit électriquement.

Le brevet FR 1 590 886 décrit un tel séparateur, celui-ci comporte un rotor creux muni d'ailettes radiales destinées à centrifuger les gouttelettes de liquide et une enveloppe percée, le long des ailettes, de passages d'évacuation du liquide récupéré ; le gaz épuré est acheminé vers l'extérieur par un passage à l'intérieur d'un tube interne. Cet état de la technique a servi à établir le préambule de la revendication principale de la présente demande.

Si l'efficacité d'un tel déshuileur est bien connue, il présente cependant l'inconvénient d'être encombrant ; le choix de son emplacement sur le moteur est difficile, du fait de son encombrement et de la nécessité de prévoir son entraînement en rotation. On peut, par exemple, prévoir son montage à l'intérieur du support d'accessoire, mais il faut alors prévoir des tuyauteries de fortes dimensions pour limiter les pertes de charges, des calorifugeages des conduits traversant la veine principale, des entretoises de forte section, etc... Tous ces éléments augmentent la masse et la complexité du moteur. On peut aussi le monter en bout d'arbre mais il augmente d'autant la longueur de celui-ci et conduit à un volume plus important du compartiment des paliers.

On connaît un autre mode de séparation centrifuge, il consiste comme le décrit la demande de brevet publiée FR 2 033 022 à guider le mélange air-huile venant des enceintes de paliers vers un conduit central ménagé à l'intérieur de l'arbre du moteur en lui faisant franchir des passages radiaux de façon à séparer les particules denses d'huile par effet centrifuge. Une deuxième séparation se produit à l'intérieur du passage central où les particules ayant acquis un mouvement tourbillonnaire sont recueillies le long de sa paroi interne. Ce dispositif s'est révélé moins efficace que le séparateur centrifuge et, faisant partie intégrante de l'arbre, il se prête beaucoup moins aux modifications, enfin il nécessite la traversée de l'arbre diminuant la résistance de ce dernier.

L'objet de l'invention est de réaliser un dispositif d'épuration des gaz qui, tout en étant aussi efficace que le séparateur centrifuge, est d'un encombrement transversal réduit permettant notamment son montage à l'intérieur de l'arbre d'une turbomachine.

Ce résultat est obtenu selon l'invention par un dispositif composé de deux tubes concentriques entraînés en rotation autour de leur axe longitudinal commun, déterminant des passages entre eux et des plans radiaux parallèles audit axe, le gaz pénétrant dans ces passages par une extrémité et sortant épuré par l'autre extrémité où il est dévié vers l'intérieur du tube interne pour être évacué, les particules liquides séparées du gaz étant elles-mêmes évacuées par des orifices ménagés à la périphérie du dispositif, caractérisé en ce que lesdits plans radiaux sont définis par des cloisons reliant le tube interne et le tube externe qui déterminent entre elles des premiers canaux formant lesdits passages de séparation gaz-liquide et communiquant par des orifices avec des seconds canaux disposés entre les premiers canaux et par lesquels sont collectées et évacuées les particules liquides séparées du gaz.

Grâce à cette disposition, le liquide est recueilli à l'intérieur même de l'enveloppe tout le long du parcours du gaz dans les canaux de séparation gaz-liquide et peut être évacué du séparateur par des orifices disposés sur un seul plan transversal par exemple. On s'affranchit ainsi de la nécessité de prévoir un carter volumineux recouvrant l'ensemble du séparateur. Un tel carter est montré dans le brevet FR 1 502 216.

Selon une autre caractéristique de l'invention, ce dispositif, lorsqu'il est appliqué au déshuilage de l'air de ventilation de l'enceinte de paliers d'une turbomachine, peut avantageusement être monté à l'intérieur de l'arbre au droit de paliers et être pourvu d'un moyen ménageant entre l'enveloppe extérieur du dispositif et la paroi interne de l'arbre une enceinte collective de l'huile récupérée et la dirigeant vers le circuit de retour au réservoir et une pluralité de chambres assurant la répartition d'huile distribuée par un gicleur vers les circuits d'alimentation desdits paliers.

Selon une autre caractéristique de l'invention ce moyen est constitué par un fourreau cylindrique entourant concentriquement le dispositif de déshuilage ménageant au moyen de cloisons transversales une pluralité de chambres entre l'enveloppe du dispositif de déshuilage et la paroi interne de l'arbre.

Ces caractéristiques ainsi que d'autres éléments sont développés dans la description qui va suivre au regard des dessins annexés montrant un mode de réalisation non limitatif de l'invention.

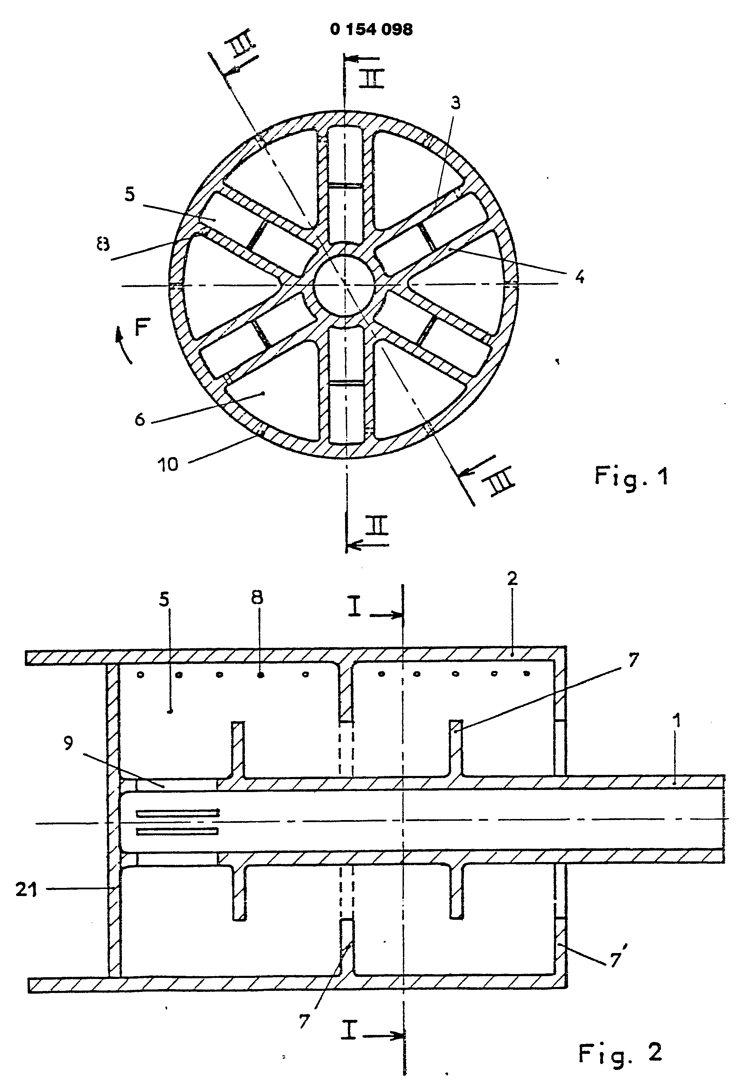

La figure 1 est une vue en coupe transversale suivant I-I de la figure 2 d'un séparateur conforme à l'invention,

La figure 2 est une vue en coupe longitudinale suivant II-II de la figure 1 du séparateur.

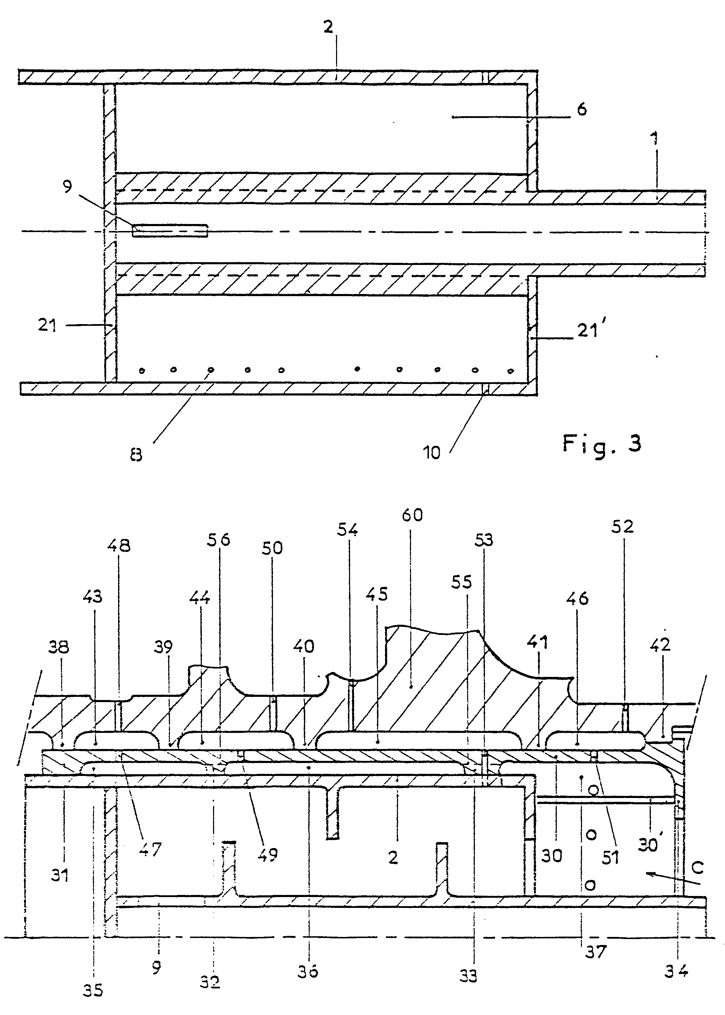

La figure 3 est une vue en coupe longitudinale suivant III-III de la figure 1 du séparateur.

La figure 4 est une vue en coupe longitudinale de l'arbre basse pression d'une turbomachine dans lequel est monté le séparateur de l'invention.

Le séparateur, de forme cylindrique est constitué de deux tubes 1 et 2 emboîtés l'un dans l'autre entraînés en rotation autour de leur axe longitudinal commun. Le tube externe 2 est fermé, près d'une extrémité, par une paroi transversale 21 ; le tube interne 1 s'appuie contre la paroi 21 et dépasse d'une certaine longueur de l'extrémité du tube externe 2 opposée à cette paroi. Les deux tubes sont reliés par des cloisons planes longitudinales 3, 4 venues de fonderie. Ces cloisons déterminent des premiers canaux 5 séparés par des seconds canaux 6. Dans le mode de réalisation présenté, les cloisons 3 et 4 sont, en coupe transversale, alternativement parallèles et concourantes de manière à définir entre elles, en combinaison avec les tubes 1 et 2 des premiers canaux 5 à section rectangulaire et des seconds canaux 6 à section triangulaire. Mais on ne sort pas du cadre de l'invention en orientant les cloisons différemment ; les premiers canaux 5 peuvent être par exemple à section trapézoïdale.

Les canaux 5 sont pourvus de chicanes transversales 7 qui sont issues successivement du tube externe 2 du tube interne 1 et s'étendent sur approximativement la moitié de la hauteur des canaux ; à l'extrémité de chaque canal 5, opposée à la paroi 21, une première chicane 7' définit un passage d'entrée du gaz à épurer situé radialement près du tube interne 1.

A leur autre extrémité les canaux 5 communiquent avec l'intérieur du tube interne par des fentes longitudinales 9 ménagées dans la paroi dudit tube interne, pour le passage et l'évacuation du gaz épuré.

Chaque canal 5 communique aussi avec le canal à section 6 adjacent, situé en arrière par rapport au sens de rotation F par des orifices 8 ménagés dans la cloison commune le long du tube externe 2. Les canaux à section triangulaire 6 dont l'extrémité située du côté de l'entrée du gaz dans le dispositif est également fermée par une cloison transversale 21' communiquent avec l'extérieur chacun par un orifice 10 d'évacuation d'huile ménagé dans la paroi du tube externe près de cette cloison.

La figure 4 montre le séparateur dans son application au déshuilage de l'air de ventilation des enceintes de paliers de turbomachine.

On a représenté en coupe longitudinale l'extrémité aval de l'arbre basse pression 60 d'une turbomachine multicorps. Cet arbre 60 est supporté en rotation par un palier par rapport à un support fixe de palier lié à un carter de la turbomachine. L'arbre basse pression 60 supporte lui-même en rotation par l'intermédiaire d'un palier interarbre le tourillon de l'arbre haute pression. Ce palier interarbre est constitué de manière connue en soi de rouleaux répartis entre une bague intérieure solidaire de l'arbre basse pression et d'une bague extérieure solidaire du tourillon de l'arbre haute pression. Par souci de clarté, ces éléments n'ont pas été représentés sur la figure.

Le dispositif de déshuilage selon l'invention est monté à l'intérieur de l'arbre basse pression par l'intermédiaire d'un fourreau cylindrique répartiteur d'huile de lubrification des paliers auquel il est solidaire. Le fourreau est constitué d'un tube 30 lui-même solidarisé à l'arbre par l'intermédiaire d'une bride serrée contre un décrochement annulaire de l'arbre 60 au moyen d'un écrou.

Le tube 30 est raidi par des nervures longitudinales 30' et comporte sur sa face interne deux cloisons annulaires 31 et 34 à chaque extrémité et, deux cloisons annulaires 32 et 33 comprises entre les deux premières. Les cloisons 31, 32 et 33 s'appuyent sur la face externe du tube 2 du déshuileur ; la longueur du tube 30 est supérieure à celle, du tube 2 de telle sorte que la cloison 34 est libre, elle définit avec la cloison 33 une première chambre angulaire 37 ouverte radialement vers l'intérieur ; une deuxième chambre 36 et une troisième chambre 35 sont définies entre les cloisons 31, 32 et 33.

Des fraisages longitudinaux 55 dans la cloison 33, répartis uniformément le long de la circonférence du fourreau font communiquer la première chambre annulaire 37 avec la deuxième chambre 36 ; de même des fraisages longitudinaux 56 dans la cloison 32 font communiquer la deuxième chambre 36 avec la troisième chambre 35.

Sur sa face externe, le fourreau est en contact étanche avec cinq cloisons annulaires 38-39-40-41-42 ménagées sur la face interne de l'arbre basse pression. Ces cloisons définissent quatre chambres annulaires 43-44-45-46.

Les communications entre les diverses chambres se présentent de la manière suivante :

Des perçages radiaux 47, 49, 51 pratiqués sur le pourtour du tube 30 font communiquer la chambre 35 avec la chambre 43, la chambre 36 avec la chambre 44 et la chambre 37 avec la chambre 46.

La chambre 43 communique par des conduits radiaux 48 pratiqués autour de l'arbre basse pression avec le circuit d'alimentation de la bague interne du palier interarbre support de l'arbre haute pression, de même la chambre 44 communique par des conduits radiaux 50 avec le circuit d'alimentation de la bague externe du palier interarbre et, la chambre 46 communique par des conduits radiaux 52 avec le circuit d'alimentation du palier support de l'arbre basse pression.

Enfin la chambre annulaire 45 communique avec les canaux à section triangulaire du dispositif de déshuilage par des perçages radiaux 53 pratiqués dans la cloison 33 au droit des orifices 10 d'évacuation de l'huile récupérée du déshuileur. Des conduits radiaux 54 pratiqués dans l'arbre relient la chambre 45 au circuit de retour d'huile vers le réservoir.

Le fonctionnement du dispositif est le suivant :

Comme nous l'avons vu précédemment, l'air présent dans les enceintes de paliers doit être évacué vers l'extérieur pour maintenir un courant d'air de barrage à travers les joints labyrinthes disposés entre les parois fixes de l'enceinte et les éléments rotoriques. Cet air chargé de gouttelettes d'huile passe dans le déshuileur avant d'être évacué vers l'extérieur. Il arrive dans l'espace compris entre le fourreau et le tube interne 1, franchit les chicanes 7', pénètre dans les canaux 5 qui impriment au mélange une composante de vitesse tangentielle ; la section constante de ces canaux favorise un écoulement laminaire limitant les pertes de charge. Le mélange suit un trajet méridien successivement centrifuge et centripède en étant guidé par les chicanes 7. La mise en rotation du mélange d'une part, entraîne la séparation des éléments de densité différentes qui le composent ; d'autre part, l'inertie des gouttelettes entraîne leur dépôt le long des parois.

L'huile recueillie passe dans des canaux à section triangulaire 6 par les orifices 8, le long de la paroi interne du tube 2 ; de là, l'huile est acheminée par les orifices 10 et les conduits 53 vers la chambre annulaire 45 où elle est collectée et renvoyée vers le circuit de retour au réservoir par les conduits 54 de l'arbre basse pression.

Arrivé à l'extrémité des canaux rectangulaires 5, l'air qui se trouve presque complètement déshuilé lorsqu'il a franchi la dernière chicane 7 est dévié par les fentes 9 vers le tube interne qui communique avec le canal d'éjection de la turbomachine.

Parallèlement, l'huile de lubrification des paliers qui peut être distribuée par un gicleur représenté symboliquement par la flèche (C) est centrifugée dans la chambre 37 du fourreau où elle forme un anneau liquide sous pression ; de cette chambre, l'huile est distribuée vers les circuits de lubrification des paliers. Le palier support de l'arbre basse pression est alimenté à partir de la chambre 37 par les passages 51 la chambre 46 et des conduits 52. La bague externe du palier interarbre est alimentée à partir de la chambre 36 par les perçages 49, la chambre 44 et les conduits radiaux 50 ; la chambre 36 ellemême reçoit l'huile de la chambre 37 par les fraisages longitudinaux 55. La chambre 35 reçoit l'huile de la chambre 36 par les fraisages longitudinaux 56 et alimente la bague interne du palier interarbre par les perçages 47 la chambre 43 et les conduits radiaux 48.

Le mode de réalisation décrit ci-dessus n'a été donné qu'à titre d'exemple, l'invention englobe toutes les variantes et modes de réalisation à la portée de l'homme de métier en particulier :

le dispositif séparateur dont le fonctionnement a été décrit dans son application au déshuilage de l'air peut aussi bien servir à la séparation d'autres liquides,

au lieu d'alimenter séparément à partir de l'arbre basse pression, la bague interne et la bague externe du palier interarbre, il est possible de les alimenter à partir d'un seul circuit. Dans ce cas, le fourreau ne définira qu'une chambre 35 ou 36 et l'arbre qu'une chambre 43 ou 44.

**Revendications**

1. Dispositif d'épuration des gaz, notamment l'air, par séparation centrifuge des particules liquides qui y sont éventuellement contenues, composé de deux tubes concentriques entraîné en rotation autour de leur axe longitudinal commun, déterminant des passages entre eux et des plans radiaux parallèles audit axe, le gaz pénétrant dans ces passages par une extrémité et sortant épuré par l'autre extrémité où il est dévié vers l'intérieur du tube interne (1) pour être évacué, les particules liquides séparées du gaz étant elles-mêmes évacuées par des orifices ménagés à la périphérie dudit dispositif caractérisé en ce que lesdits plans radiaux sont définis par des cloisons (3 et 4) reliant le tube interne (1) et le tube externe (2) qui déterminent entre elles des premiers canaux (5) formant lesdits passages de séparation gaz-liquide et communiquant par des orifices (8) avec des seconds canaux disposés entre les premiers canaux (6) et par lesquels sont collectées et évacuées les particules liquides séparées du gaz.

2. Dispositif selon la revendication 1 caractérisé en ce que les cloisons (3 et 4) sont alternativement parallèles et concourantes ; les canaux dont les deux cloisons sont parallèles entre elles constituant lesdits premiers canaux (5).

3. Dispositif selon l'une des revendications précédentes caractérisé en ce que lesdits premiers canaux (5) comportent une pluralité de chicanes (7) transversales issues alternativement du tube externe (2) et du tube interne (1) de façon à imprimer au gaz à épurer des directions successivement centrifuges et centripètes.

4. Dispositif selon l'une des revendications 1 à 3 caractérisé en ce que les orifices (8) sont ménagés le long de la cloison commune (3) desdits premiers et seconds canaux (5, 6) près du tube externe (2).

5. Dispositif selon l'une des revendications 1 à 4 caractérisé en ce que chacun des seconds canaux (6) communique avec l'extérieur par un perçage (10) du tube externe situé près du plan d'entrée dans le dispositif du gaz à épurer.

6. Dispositif de déshuilage de l'air de ventilation d'une enceinte de paliers d'une turbomachine caractérisé en ce qu'un dispositif selon l'une des revendications 1 à 5 est monté à l'intérieur de l'arbre (60) de la turbomachine au droit des paliers logés dans ladite enceinte, et en ce qu'il est pourvu d'un moyen pour ménager entre le tube externe (2) et la paroi interne de l'arbre (60), une enceinte (45) collectant l'huile récupérée dans le dispositif et la dirigeant vers le circuit de retour au réservoir et en ce qu'il comporte une pluralité de chambres assurant la répartition d'huile vers les circuits d'alimentation desdits paliers.

7. Dispositif selon la revendication 6 caractérisé en ce que le moyen consiste en un fourreau (30) monté concentriquement autour du tube externe (2) et pourvu de cloisons (32, 33, 34) annulaires transversales sur sa face interne de manière à former au moins deux chambres annulaires (37, 36) : une première chambre (37) ouverte radialement vers l'intérieur collectant par centrifugation l'huile provenant de ladite enceinte de palier et la distribuant vers la deuxième chambre (36) par des perçages longitudinaux (53) de la cloison intermédiaire (33) ; les deux chambres (37, 36) communiquant chacune par des perçages radiaux (51, 49) avec un circuit d'alimentation d'élément de palier à graisser.

8. Dispositif selon la revendication 7 caractérisé en ce que le fourreau ménage au moyen d'une cloison (31) une troisième chambre (35) annulaire alimentée par la deuxième chambre (36) par des perçages (56) longitudinaux de la cloison intermédiaire (32) et communiquant par des perçages radiaux (47) avec un troisième circuit d'alimentation en huile d'un palier.

9. Dispositif selon l'une des revendications 7 et 8 caractérisé en ce que le fourreau délimite avec la paroi interne de l'arbre et des cloisons transversales annulaires (38, 39, 40, 41, 42) d'une part des chambres (43, 44, 46) communiquant chacune par des perçages radiaux (47, 49, 51, 48, 50, 52) d'un côté avec une chambre (35, 36, 37) formée à l'intérieur du fourreau de l'autre côté avec un circuit d'alimentation en huile d'un palier, d'autre part, un collecteur annulaire (45) communiquant par des perçages (53) radiaux ménagés dans une cloison (33) avec les orifices (10) d'évacuation de l'huile récupérée par le dispositif, et par des passages radiaux (54) ménagés dans l'arbre avec le circuit de retour d'huile vers le réservoir.

**Claims**

1. Device for the purification of gases, particularly air, by centrifugal separation of liquid particles which may be contained therein, comprising two concentric tubes rotatable about their common longitudinal axis, defining intermediate passages and radial planes parallel to the said axis, the gas entering into these passages at one end and leaving when purified at the other end where they are deflected towards the inside of the internal tube (1) in order to be evacuated, the separated liquid particles from the gaz being themselves evacuated through orifices provided at the periphery of the said device characterized in that the said radial planes are defined by partitions (3 and 4) connecting the internal tube (1) and the external tube (2) which define between them first ducts (5) forming the said passages for separation of gas from the liquid and communicating through orifices (8) with second ducts disposed between the first ducts (6) and through which are collected and evacuated the liquid particles separated from the gas.

2. Device according to claim 1 characterized in that the partitions (3 and 4) are alternatively parallel and convergent ; the ducts of which the two partitions are mutually parallel constituting the said first ducts (5).

3. Device according to one of the preceding claims characterized in that the said first ducts (5) comprise a plurality of transverse baffle plates (7) extending alternatively from the external tube (2) and from the internal tube (1) in such a manner as to impart on the gas to be purified successively centrifugal and centripetal directions.

4. Device according to one of claims 1 to 3 characterized in that the orifices (8) are provided along the common partition (3) of the said first and second ducts (5, 6) adjacent to the external tube (2).

5. Device according to one of claims 1 to 4 characterized in that the each of the second ducts (6) communicates with the ambient through a bore (10) in the external tube situated adjacent to the entry plane of the device for the gas to be purified.

6. Device for removing oil from cooling air of a bearing housing of a turbo machine characterized in that the device according to any one of claims 1 to 5 is mounted in the interior of the shaft (60) of the turbo machine in the region of the bearings located within the said enclosure and in that it is provided with means for forming between the external tube (2) and the internal wall of the shaft (60), an enclosure (45) collecting the oil recovered within the device and directing it towards the circuit for return to the reservoir and in that it comprises a plurality of chambers enabling the distribution of the oil to the supply circuits of the said bearings.

7. Device according to claim 6, characterized in that the means comprise a cover (30) mounted concentrically about the external tube (2) and provided with annular transverse partitions (32, 33, 34) on the internal face in such a manner as to form at least two annular chambers (37, 36) : a first chamber (37) open radially inwardly collecting by centrifugal force oil received from the said enclosure of the bearing and distributing it the second chamber (36) by longitudinal bores (53) of the intermediate partition (33) ; the two chambers (37, 36) each communicating by radial bores (51, 49) with a supply circuit of the element of the bearing to the lubricated.

8. Device according to claim 7 characterized in that the having provided with at least one partition (31), a third chamber (35) of annular shape supplied by the second chamber (36) through bores (56) extending longitudinally of the intermediate partition (32) and communicating by radial bores (47) with a third supply circuit for oil to a bearing.

9. Device according to one of claims 7 and 8 characterized in that the housing defines with the internal wall of the shaft and annular transverse partitions (38, 39, 40, 41, 42) on the one hand chambers (43, 44, 46) each communicating through radial bores (47, 49, 51, 48, 50, 52) on one side with a chamber (35, 36, 37) formed within the housing on the other side with a supply circuit for oil to a bearing, on the other hand, an annular collector (45) communicating through radial bores (53) in a partition (33) with orifices (10) for the removal of recovered oil by the device, and through radial passages (54) provided in the shaft with the oil return circuit to the reservoir.

## Patentansprüche

1. Vorrichtung zum Reinigen von Gasen, insbesondere von Luft, durch zentrifugales Abtrennen von gegebenenfalls vorhandenen flüssigen Partikeln, bestehend aus zwei konzentrischen Rohren, die mit einer Rotationsbewegung um ihre gemeinsame Längachse beaufschlagbar sind und die zwischen sich und parallel zu der genannten Achse verlaufenden radialen Ebenen Durchgänge begrenzen, wobei das Gas durch ein Ende in diese Durchgänge eindringt und sie durch das andere Ende gereinigt verläßt oder zum Zweck der Abführung in das Innere des Innenrohrs (1) umgeleitet wird, und wobei die von dem Gas getrennten flüssigen Partikel durch in der Peripherie der Vorrichtung angebrachte Öffnungen abgeführt werden, dadurch gekennzeichnet, daß die genannten radialen Ebenen von Trennwänden (3 und 4) begrenzt sind, die das Innenrohr (1) und daß Außenrohr (2) miteinander verbinden und zwischen sich erste Kanäle (5) begrenzen, die die genannten Durchgänge zur Gas-Flüssigkeits-Trennung bilden und über Öffnungen (8) mit zweiten Kanälen in Verbindung stehen, die zwischen den ersten Kanälen (6) angeordnet sind und durch die die von dem Gas getrennten flüssigen Partikel gesammelt und abgeführt werden.

2. Vorrichtung nach Anspruch 1, dadurch gekennzeichnet, daß die Trennwände (3 und 4) in abwechselnder Folge parallel zueinander angeordnet sind bzw. zusammenlaufen, wobei die Kanäle, die von zwei zueinander parallelen Trennwänden gebildet sind, die genannten ersten Kanäle (5) darstellen.

3. Vorrichtung nach einem der vorhergehenden Ansprüche, dadurch gekennzeichnet, daß die ersten Kanäle (5) mehrere transversale Ablenkplatten (7) enthalten, die derart abwechselnd von dem Außenrohr (2) und dem Innenrohr (1) ausgehend, so daß sie dem zu reinigenden Gas aufeinanderfolgend zentrifugale und zentripetale Richtungen aufprägen.

4. Vorrichtung nach einem der Ansprüche 1 bis 3, dadurch gekennzeichnet, daß die genannten Öffnungen (8) längs der gemeinsamen Trennwand (3) der ersten und der zweiten Kanäle (5, 6) in der Nähe des Außenrohrs (2) angebracht sind.

5. Vorrichtung nach einem der Ansprüche 1 bis 4, dadurch gekennzeichnet, daß jeder der zweiten Kanäle (6) mit dem Außenraum über eine Lochung (10) des Außenrohrs in Verbindung steht, die sich in der Nähe der Ebene befindet, in der das zu reinigende Gas in die Vorrichtung eintritt.

6. Vorrichtung zur Entölung der Kühlluft eines Lagergehäuses einer Turbomaschine, dadurch gekennzeichnet, daß eine Vorrichtung nach einem der Ansprüche 1 bis 5 im Inneren der Welle (6) der Turbomaschine im Bereich der in dem Lagergehäuse angeordneten Lager montiert ist, daß diese Vorrichtung mit Mitteln versehen ist, durch die zwischen dem Außenrohr (2) und der Innenwand der Welle (60) eine Umfassung (45) gebildet ist, die das in der Vorrichtung zurückgewonnene Öl sammelt und zu dem in den Ölbehälter zurückführenden Kreis leitet, und daß mehrere Kammern vorgesehen sind, die eine Aufteilung des Öls auf die Versorgungskreise der Lager gewährleisten.

7. Vorrichtung nach Anspruch 6, dadurch gekennzeichnet, daß die genannten Mittel aus einer konzentrisch um das Außenrohr (2) montierten Buchse (30) bestehen, an deren Innenwand ringförmige transversale Trennwände (32, 33, 34) derart angeordnet sind, daß sie wenigstens zwei ringförmige Kammern (37, 36) bilden : eine erste radial nach innen offene Kammer (37), die das aus dem Lagergehäuse kommende Öl durch Zentrifugation sammelt und durch longitudinale Durchbrüche (53) der mittleren Trennwand (33) in Richtung auf die zweite Kammer (36) verteilt, und daß die beiden Kammern (37, 36) jeweils über radiale Durchbrüche (51, 49) mit einem Versorgungskreis für die zu schmierenden Lagerelemente in Verbindung stehen.

8. Vorrichtung nach Anspruch 7, dadurch gekennzeichnet, daß die Buchse zusammen mit einer dritten Trennwand (31) eine dritte ringförmige Kammer (85) bildet, die von der zweiten Kammer (36) durch longitudinale Durchbrüche (56) in der mittleren Trennwand (32) gespeist wird und über radiale durchbrüche (47) mit einem dritten Ölspeisekreis für ein Lager in Verbindung steht.

9. Vorrichtung nach einem der Ansprüche 7 und 8, dadurch gekennzeichnet, daß die Buchse zusammen mit der Innenwand der Welle und mit ringförmigen transversalen Trennwänden (38, 39, 40, 41, 42) zum einen Kammern (43, 44, 46), die jeweils über radiale Durchbrüche (47, 49, 41, 48, 50, 52) einerseits mit einer im Innern der Buchse gebildeten Kammer (35, 36, 37) und andererseits mit einem Ölversorgungskreis eines Lagers in Verbindung stehen, und zum andern einen ringförmigen Sammelraum (45) begrenzt, der über in einer Trennwand (33) vorgesehene radiale Durchbrüche (53) mit den Öffnungen (10) für das Abführen des von der Vorrichtung zurückgewonnenen Öls sowie über in der Welle angebrachte radiale Durchgänge (54) mit dem Kreis zur Rückführung von Öl zu dem Ölbehälter in Verbindung steht.

0 154 098

Fig. 1

Fig. 2

Fig. 3